# EUROPEAN PATENT APPLICATION

(11) **EP 3 206 375 A1**
(43) Date of publication of application: **16.08.2017**
(21) Application number: 17154513.0
(22) Date of filing: 03.02.2017
(51) Int. Cl.: H04L 29/08, G06F 3/12, H04L 29/06

(54) **SERVER APPARATUS AND CONTROL METHOD**

(30) Priority: 09.02.2016 US 201615018975
(71) Applicant: Kabushiki Kaisha Toshiba, Tokyo 105-8001 (JP); Toshiba TEC Kabushiki Kaisha, Tokyo 141-0032 (JP)
(72) Inventor: FUTAMATA, Yukio, Shinagawa-ku, Tokyo 141-8562 (JP); KITAJIMA, Tatsuya, Shinagawa-ku, Tokyo 141-8562 (JP); WATANABE, Takeshi, Shinagawa-ku, Tokyo 141-8562 (JP)
(74) Representative: Takeuchi, Maya

(57) **Abstract**

A server apparatus according to an embodiment comprises an authentication section and a setting control section. The authentication section executes an authentication processing for determining whether or not a user is the valid one. The setting control section, according to an authentication result and condition information designated by the user, selects setting information which is information relating to operations of an image forming apparatus used by the user and transmits the setting information to the image forming apparatus.

## Description

### FIELD

The present invention relates to the field of image forming technologies in general, and embodiments described herein particularly relate to a server apparatus and a control method and an image forming apparatus or system.

### BACKGROUND

An apparatus corresponding to a plurality of types of sheets is provided as an image forming apparatus such as an MFP (Multi-Function Peripheral). In particular, in recent years, various types of sheets such as a coated sheet, a waterproof sheet, an embossed sheet and a label sheet are provided. In response to the supply of multipurpose sheets, it is possible to carry out an image forming processing for various uses such as an office use. A user can properly carry out a setting operation relating to image formation individually according to the type and use of a sheet.

However, there is a case in which the setting operation relating to the image forming is so complicated that time and labor spent on the setting is required.

To solve such problems, there is provided a server apparatus, comprising:
an authentication section configured to execute an authentication processing for determining whether or not a user is the valid one; and
a setting control section configured to select setting information which is information relating to operations of an image forming apparatus used by the user according to an authentication result and condition information designated by the user and transmit the setting information to the image forming apparatus.

Preferably, the setting information contains either or both of device setting information relating to an operation of a print section of the image forming apparatus and image quality setting information relating to an operation of an image processing section of the image forming apparatus.

Preferably still, the setting control section only transmits the setting information set by a user who is authenticated as the valid user through the authentication section to the image forming apparatus.

Preferably yet, the condition information indicates conditions relating to image formation.

Suitably, the setting information is defined for each type of the image forming apparatus; and
the setting control section selects the setting information corresponding to the type of an image forming apparatus used by the user.

Suitably still, the setting control section sends confirmation information which is information represents how to form an image in a case in which image formation is carried out according to the selected setting information.

Suitably yet, the setting information is defined for each user; and
the setting control section selects the setting information corresponding to the user.

Typically, the setting information contains device setting information relating to an operation of a print section of the image forming apparatus and image quality setting information relating to an operation of an image processing section of the image forming apparatus;
the device setting information is defined for each type of the image forming apparatus;
the image quality setting information is defined for each user; and
the setting control section, for the device setting information, selects the device setting information corresponding to the type of the image forming apparatus used by the user, and for the image quality setting information, selects the image quality setting information corresponding to the user.

The invention also relates to a control method, including:
executing an authentication processing for determining whether or not a user is the valid one; and
selecting setting information which is information relating to operations of an image forming apparatus used by the user according to an authentication result and condition information designated by the user, and transmitting the setting information to the image forming apparatus.

Preferably, the setting information contains either or both of device setting information relating to an operation of a print section of the image forming apparatus and image quality setting information relating to an operation of an image processing section of the image forming apparatus.

Preferably still, the control method further comprises the step of:
only transmitting the setting information set by a user who is authenticated as the valid user through the authentication section to the image forming apparatus.

Preferably yet, the condition information indicates conditions relating to image formation.

Suitably, the setting information is defined for each type of the image forming apparatus; and the method further comprises the step of:
selecting the setting information corresponding to the type of an image forming apparatus used by the user.

Suitably still, the control method further comprises the step of:
sending confirmation information which is information represents how to form an image in a case in which image formation is carried out according to the selected setting information.

The invention further concerns an image forming apparatus or system, comprising:
a print section configured to form an image on a sheet according to image data serving as an object of image formation;
a control section configured to carry out the image formation by controlling the print section according to setting information transmitted from the server apparatus as defined above.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a system structure diagram illustrating an example of an image forming system containing an image forming apparatus 100 according to an embodiment;
FIG. 2 is a block diagram illustrating an example of functional components of the image forming apparatus 100;
FIG. 3 is a diagram illustrating a concrete example of a setting information table stored by a setting information storage section 204;
FIG. 4 is a sequence chart illustrating a concrete example of procedures of operations of the image forming system;
FIG. 5 is a diagram illustrating a concrete example of a screen displayed on a display section 303 of a terminal device 300;
FIG. 6 is a diagram illustrating a concrete example of a screen displayed on the display section 303 of the terminal device 300;
FIG. 7 is a diagram illustrating a concrete example of a screen displayed on the display section 303 of the terminal device 300; and
FIG. 8 is a diagram illustrating a concrete example of a screen displayed on the display section 303 of the terminal device 300.

### DETAILED DESCRIPTION

A server apparatus according to an embodiment comprises an authentication section and a setting control section. The authentication section executes an authentication processing for determining whether or not a user is the valid one. The setting control section, according to an authentication result and condition information designated by the user, selects setting information which is information relating to operations of an image forming apparatus used by the user and transmits the setting information to the image forming apparatus or system.

Hereinafter, the server apparatus and a control method according to the embodiment are described with reference to the accompanying drawings.

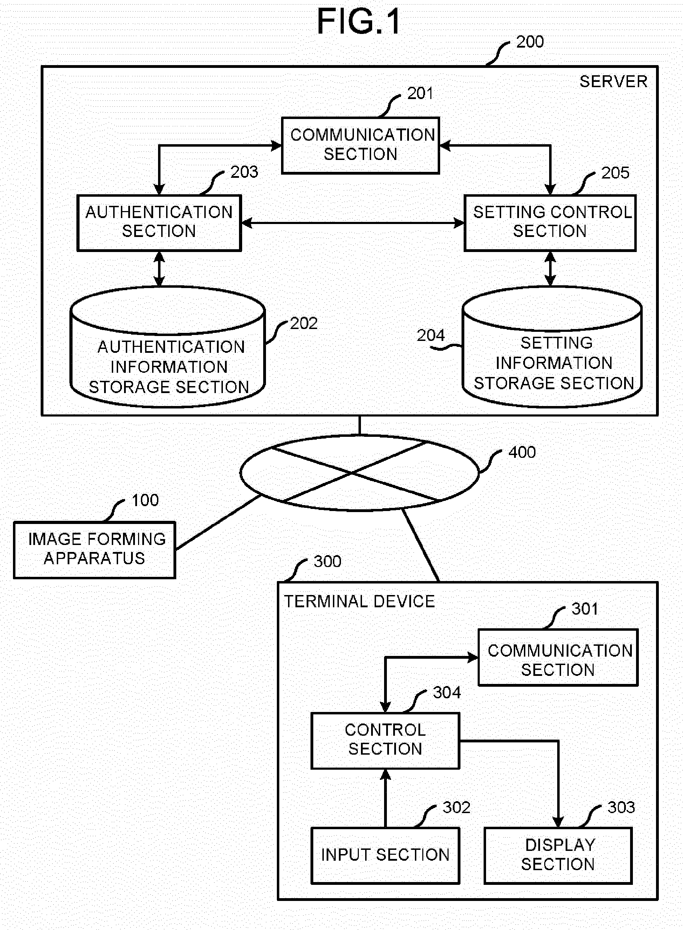

FIG. 1 is a system structure diagram illustrating an example of an image forming system that contains an image forming apparatus 100 according to the embodiment. The image forming system is provided with the image forming apparatus 100 and a server 200. The image forming apparatus 100 and the server 200 are connected with each other in a communicable manner via a network 400. The image forming apparatus 100 and the server 200 can communicate with a terminal device 300 via the network 400. The network 400 may be a single network (for example, Local Area Network: LAN), or a combination of a plurality of networks (for example, LAN and Internet).

The image forming apparatus 100 is, for example, an MFP (Multifunction Peripheral) or a printer. The image forming apparatus 100 forms an input image on a sheet and discharges the sheet on which the image is formed. The image forming apparatus 100 uses setting information provided from the server 200 at the time of forming the image. The setting information is information used in an image forming processing carried out by the image forming apparatus 100. The setting information is information relating to operations of the image forming apparatus 100. The setting information contains, for example, device setting information and image quality setting information. The device setting information is setting information relating to device control of a print section 4 of the image forming apparatus 100. The image quality setting information is setting information relating to an image processing carried out by an image processing section 5 of the image forming apparatus 100.

The image forming apparatus 100 forms the image by, for example, fixing toner on the sheet. In this case, the device setting information is, for example, a transfer condition of a transfer section or a fixing condition of a fixing section. The transfer condition is information used for controlling a toner transfer processing. The transfer condition is, for example, a transfer voltage. The fixing condition is information used for controlling a toner fixing processing. The fixing condition is, for example, a temperature of the fixing section, and a conveyance speed of the sheet in the fixing section. The image quality setting information indicates, for example, strength of color development of color, presence or absence of a line thinning processing, strength of contrast and gradation. The strength of color development of color may be set for each color of, for example, RGB or CMYK. Effect of the line thinning processing may be not only controlled by presence or absence of the line thinning processing but also controlled by changing coefficient of a line thinning filter. The strength of contrast may be set as a coefficient and presence or absence of an edge enhancement filter. The gradation may be set as a y conversion table.

The image forming apparatus 100 is not limited to an image forming apparatus for fixing a toner image and may be an inkjet type image forming apparatus. In this case, the device setting information is, for example, information (e.g. ejection amount of ink) used for controlling an ink ejection processing. The image quality setting information has the same components as that in a case of toner.

The server 200 is a communicable information processing apparatus. The server 200 stores the setting information. The server 200 provides the setting information used for image formation for the image forming apparatus 100 according to an instruction received from the terminal device 300.

The terminal device 300 is a communicable information processing apparatus. The terminal device 300 is, for example, a personal computer, a tablet device, a smart phone and the like. The terminal device 300 sends the instruction relating to the image formation to the server 200 according to an operation of the user.

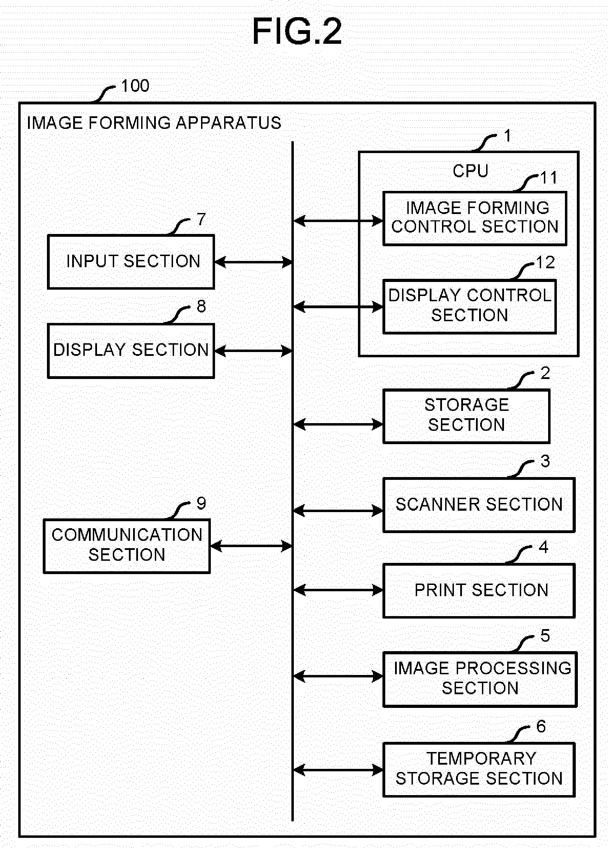

FIG. 2 is a block diagram illustrating an example of functional components of the image forming apparatus 100. The image forming apparatus 100 is provided with a CPU (Central Processing Unit) 1, a storage section 2, a scanner section 3, the print section 4, the image processing section 5, a temporary storage section 6, an input section 7, a display section 8 and a communication section 9.

The CPU 1 includes an arithmetic device and a temporary storage device. The CPU 1 executes a control program to function as an image forming control section 11 and a display control section 12. The image forming control section 11 and the display control section 12 may be partially or wholly installed as hardware.

The image forming control section 11 controls operations of the print section 4 to form an image on a sheet. The image forming control section 11 controls operations of the print section 4 and the image processing section 5 on the basis of preset setting information and setting information received from the server 200. For example, the image forming control section 11 may preferentially use the setting information received from the server 200 to control the operations of the print section 4 and the image processing section 5.

The display control section 12 controls the display of a user interface displayed on the display section 8 on the basis of an operation carried out on the input section 7 by the user.

The storage section 2 is composed of a storage device such as a semiconductor storage device and a magnetic hard disk device. The storage section 2 stores the control program executed by the CPU 1 and data such as the setting information preset in the image forming apparatus 100.

The scanner section 3 reads an image formed on a sheet serving as a read object as light intensity. The scanner section 3 generates image data indicating the read image. The generated image data may be sent to another information processing apparatus via the communication section 9. The generated image data may be used by the print section 4 to form an image on a sheet.

The print section 4 forms an image on a sheet according to the image data (hereinafter, referred to as "object image data") serving as an object of the image formation. The object image data may be, for example, image data generated by the scanner section 3. The object image data may be, for example, image data received from the terminal device 300 via the communication section 9. The object image data may also be, for example, image data recorded in an external storage device such as a USB memory. The print section 4 forms an image through, for example, the following processing. An image forming section of the print section 4 forms an electrostatic latent image on a photoconductive drum according to the image data. The image forming section of the print section 4 attaches a developing agent to the electrostatic latent image to form a visible image. Toner is a concrete example of the developing agent. The transfer section of the print section 4 transfers the visible image onto a sheet. The fixing section of the print section 4 heats and presses the sheet to make the visible image fixed on the sheet.

The image processing section 5 executes an image processing for the object image data. The content of the image processing executed by the image processing section 5, for example, may be pre-defined in the control program executed by the CPU 1. The content of the image processing executed by the image processing section 5, for example, may be provided as the setting information from the server 200. For example, the image processing section 5 may preferentially use the setting information received from the server 200 to execute the image processing.

The temporary storage section 6 is composed of a storage device such as a semiconductor storage device. The temporary storage section 6 is used by an arithmetic processing apparatus such as the CPU 1 as a temporary storage area. The temporary storage section 6 stores, for example, the setting information received from the server 200. The temporary storage section 6 stores, for example, image data serving as a print object received from the terminal device 300.

The input section 7 is provided with an input device for receiving operations of the user. The input section 7 outputs a signal corresponding to an operation carried out by the user to the CPU 1.

The display section 8 is an image display device such as a liquid crystal display, an organic EL (Electro Luminescence) display and the like. The display section 8 displays various kinds of information relating to the image forming apparatus 100.

The communication section 9 is composed of a network interface. The communication section 9 communicates with the server 200 and the terminal device 300 via the network 400.

Next, with the use of FIG. 1, an example of functional components of the server 200 is described. The server 200 is provided with a communication section 201, an authentication information storage section 202, an authentication section 203, a setting information storage section 204 and a setting control section 205. The functions of the authentication section 203 and the setting control section 205 may be realized through the execution of a program by a CPU of the server 200. The authentication section 203 and the setting control section 205 may be partially or wholly installed as hardware.

The communication section 201 is composed of a network interface. The communication section 201 communicates with the image forming apparatus 100 and the terminal device 300 via the network 400.

The authentication information storage section 202 is composed of a storage device such as a semiconductor storage device and a magnetic hard disk device. The authentication information storage section 202 stores an authentication information table. In the authentication information table, authentication information by means of which a user (hereinafter, referred to as a "valid user") who has valid authority to use the image forming apparatus 100 can be authenticated is registered. The authentication information table includes, for example, a record that associates identification information (hereinafter, referred to as a "user ID") of a valid user with a password for each valid user. In the following description, the user ID and the password are described as concrete examples of the authentication information.

The authentication section 203 executes an authentication processing according to authentication information received from the terminal device 300 and authentication information stored in the authentication information storage section 202. The authentication section 203 executes the authentication processing to determine whether or not the user of the terminal device 300 is the valid user. The authentication section 203 outputs a determination result to the setting control section 205. The authentication section 203 may send the determination result to the terminal device 300 via the network 400.

The setting information storage section 204 is composed of a storage device such as a semiconductor storage device and a magnetic hard disk device. The setting information storage section 204 stores a setting information table. In the setting information table, setting information used at the time of the image formation by the image forming apparatus 100 is registered by each of condition information designated by the user. The condition information indicates conditions relating to the image formation. The condition information may be, for example, a combination of the type of a sheet used in the image formation and a purpose of the image formation (a use purpose of the sheet on which the image is formed). The condition information may be, for example, either the type of a sheet used in the image formation and a purpose of the image formation (a user purpose of the sheet on which the image is formed).

The setting control section 205 selects setting information according to the condition information received from the terminal device 300 and the setting information table stored in the setting information storage section 204. The setting control section 205 sends the selected setting information to the image forming apparatus 100 via the communication section 201.

Next, with the use of FIG. 1, an example of functional components of the terminal device 300 is described. The terminal device 300 is provided with a communication section 301, an input section 302, a display section 303 and a control section 304. The functions of the control section 304 may be realized through the execution of a program by a CPU of the terminal device 300. The control section 304 may be partially or wholly installed as hardware.

The communication section 301 is composed of a network interface. The communication section 301 communicates with the image forming apparatus 100 and the server 200 via the network 400.

The input section 302 is composed of an existing input device such as a keyboard, a pointing device (a mouse, a tablet, etc.), buttons, a touch panel and the like. The input section 302 is operated by the user at the time an instruction of the user is input to the terminal device 300. The input section 302 may be an interface for connecting the input device with the terminal device 300. In this case, the input section 302 inputs an input signal generated according to the input of the user by the input device to the terminal device 300.

The display section 303 is an image display device such as a CRT (Cathode Ray Tube) display, a liquid crystal display, an organic EL (Electro Luminescence) display and the like. The display section 303 displays an image under the control of the control section 304. The display section 303 may be an interface for connecting the image display device with the terminal device 300. In this case, the display section 303 generates an image signal for displaying an image. Then, the display section 303 outputs the image signal to the image display device connected with itself.

The control section 304 operates according to information and an instruction input according to the operation of the user of the terminal device 300 on the input section 302. For example, in a case in which authentication information is input by the user, the control section 304 sends the authentication information to the server 200 via the communication section 301.

The authentication information table includes a plurality of records. Each record in the authentication information table comprises values of a record number, a user ID and a password. The record number is identification information of the record in the authentication information table. The user ID is identification information applied to the valid user. The password is information used at the time of carrying out an authentication processing that authenticates whether or not the user is the valid one.

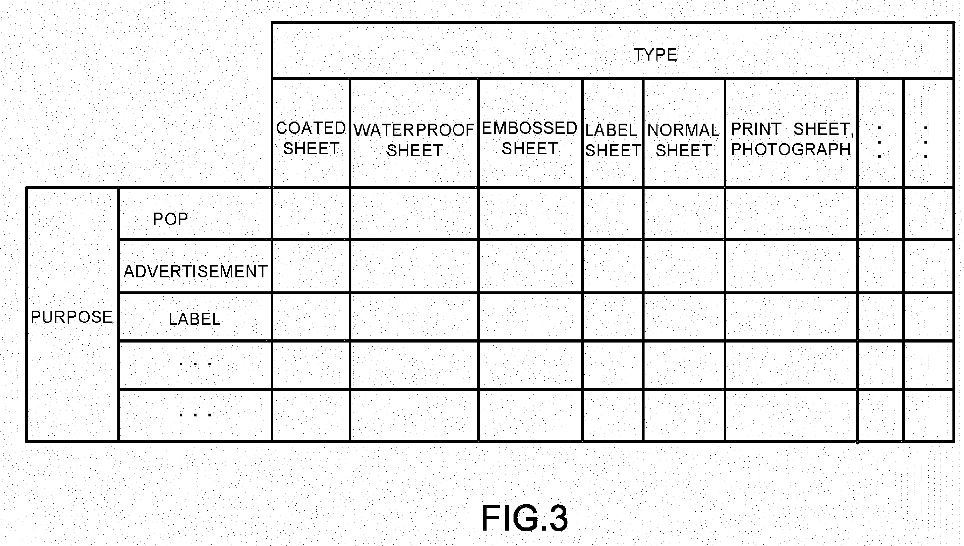

FIG. 3 is a diagram illustrating a concrete example of the setting information table stored in the setting information storage section 204. In the setting information table shown in FIG. 3, a coated sheet, a waterproof sheet, an embossed sheet and the like are exemplified as concrete examples of types of sheets. In the setting information table shown in FIG. 3, a pop, an advertisement, a label and the like are exemplified as concrete examples of purposes of the image formation.

In the setting information table, setting information is registered for each combination of the type of a sheet and a purpose of the image formation. The registered setting information is considered to be suitable to carry out the image formation with the purpose on the sheet of the type. For example, in a case in which a sheet of which the resistance value is high is used, a value of the transfer voltage higher than that at the time a normal sheet is used may be set. A sheet like the coated sheet to which a special processing is carried out and a sheet with a large thickness are concrete examples of the sheet of which the resistance value is high. For example, in a case in which conduction efficiency of heat to a sheet is worse, a value of a fixing temperature higher than that at the time the normal sheet is used may be set. For example, in a case in which conduction efficiency of heat to a sheet is worse, a value of a conveyance speed slower than that at the time the normal sheet is used may be set. A sheet that is made from material of which the heat resistance rate is high and a sheet with a large thickness are concrete examples of the sheet to which the conduction efficiency of heat is worse.

For example, in a case in which the purpose of the image formation is the pop, the image quality setting information may be set in such a manner that the strength of the color development of the colors wholly comes out intensively and the contrast is increased. For example, in a case in which the purpose of the image formation is the label, the image quality setting information may be set in such a manner that there is the line thinning processing and the contrast is increased.

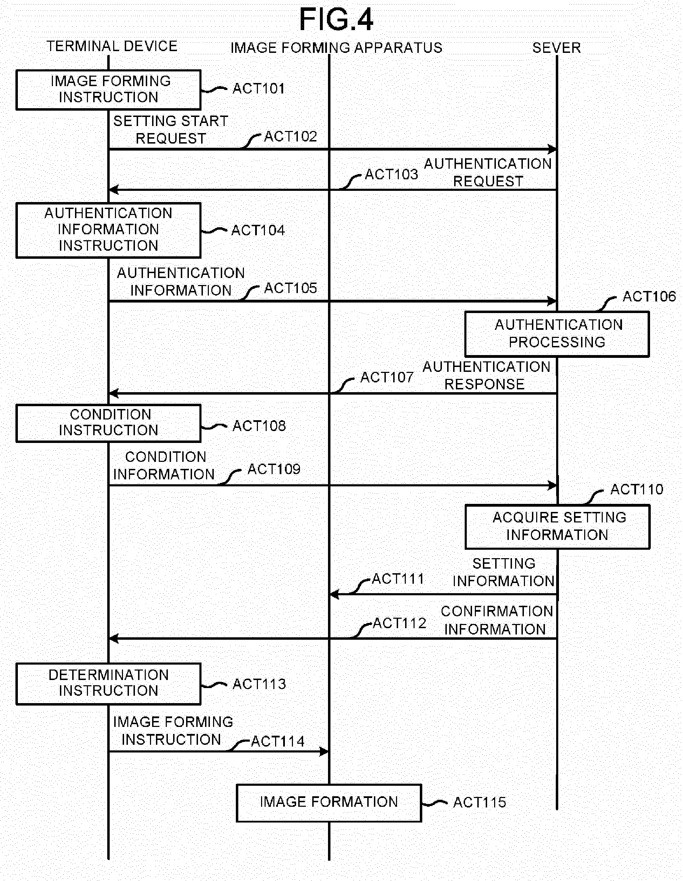

FIG. 4 is a sequence chart illustrating a concrete example of procedures of operations of the image forming system. First, the valid user operates the terminal device 300 to input an image forming instruction (ACT 101). The image forming instruction indicates the execution of the image formation (for example, printing) in the image forming apparatus 100. In the image forming instruction, information (for example, identification information of the image forming apparatus 100) indicating that the image formation is carried out in which image forming apparatus 100 is contained. In the image forming instruction, information indicating the object image data is also contained. The control section 304 of the terminal device 300 sends a setting start request to the server 200 according to the image forming instruction (ACT 102). The setting start request indicates a request for carrying out a setting operation in the image forming apparatus 100. In the setting start request, identification information indicating the image forming apparatus 100 is contained.

If the authentication section 203 of the server 200 receives the setting start request, the authentication section 203 sends an authentication request to the terminal device 300 from which the setting start request is sent (ACT 103). If the authentication request is received, the control section 304 of the terminal device 300 enables the display section 303 to display a screen for requesting the user to input the authentication information. The user instructs the authentication information (a user ID and a password) according to the display of the screen (ACT 104). The instruction of the authentication information may be used to select the authentication information registered in advance, or to input each value. The control section 304 sends the instructed authentication information to the server 200 (ACT 105).

If the authentication section 203 of the server 200 receives the authentication information, the authentication section 203 carries out an authentication processing (ACT 106). The authentication section 203 outputs information (the user ID and authentication result) indicating an authentication result to the setting control section 205. The authentication section 203 sends an authentication response serving as the information indicating the authentication result to the terminal device 300 (ACT 107).

If the control section 304 of the terminal device 300 receives the authentication response, the control section 304 enables the display section 303 to display a screen for requesting the user to input the condition information. The user instructs condition information (the type of a sheet used in the image formation and the purpose of the image formation) according to the display of the screen (ACT 108). The instruction of the condition information may be used to select the condition information registered in advance, or to input conditions. The control section 304 sends the instructed condition information to the server 200 (ACT 109). The user ID contained in the authentication information sent in ACT 105 may also contained in the sent condition information.

If the setting control section 205 of the server 200 receives the condition information, the setting control section 205 reads out the setting information corresponding to the condition information from the setting information storage section 204 (ACT 110). The setting control section 205 of the server 200 sends the read setting information to the image forming apparatus 100 (ACT 111). The image forming apparatus 100 to which the read setting information is sent may be, for example, the image forming apparatus 100 indicated by the identification information contained in the setting start request received in ACT 102. Further, the setting control section 205 sends confirmation information to the terminal device 300 (ACT 112). The confirmation information represents how to form the image in a case in which the image formation is carried out according to the setting information sent in ACT 111. For example, the confirmation information may be image data indicating an example of an image after the image formation.

The processing in ACT 110∼ACT 112 may be carried out only in a case in which the received condition information is the condition information of the user who is authenticated as the valid user. In other words, the setting control section 205 may only notify the user who is authenticated as the valid user of the setting information for the image forming apparatus.

If the control section 304 of the terminal device 300 receives the confirmation information, the control section 304 enables the display section 303 to display a screen indicating the received confirmation information. The control section 304 further enables the display section 303 to display a screen for requesting the user to input an instruction (determination instruction) of executing the image formation. The user instructs the execution of the image formation according to the display of the screen (ACT 113). The control section 304 sends an image forming instruction indicating that the determination instruction is input to the image forming apparatus 100 (ACT 114). In the image forming instruction, the object image data is contained. If the image forming control section 11 of the image forming apparatus 100 receives the image forming instruction, the image forming control section 11 executes the image formation according to the setting information designated in ACT 111 (ACT 115). The image data by means of which the image formation is executed in ACT 115 is the object image data contained in the image forming instruction.

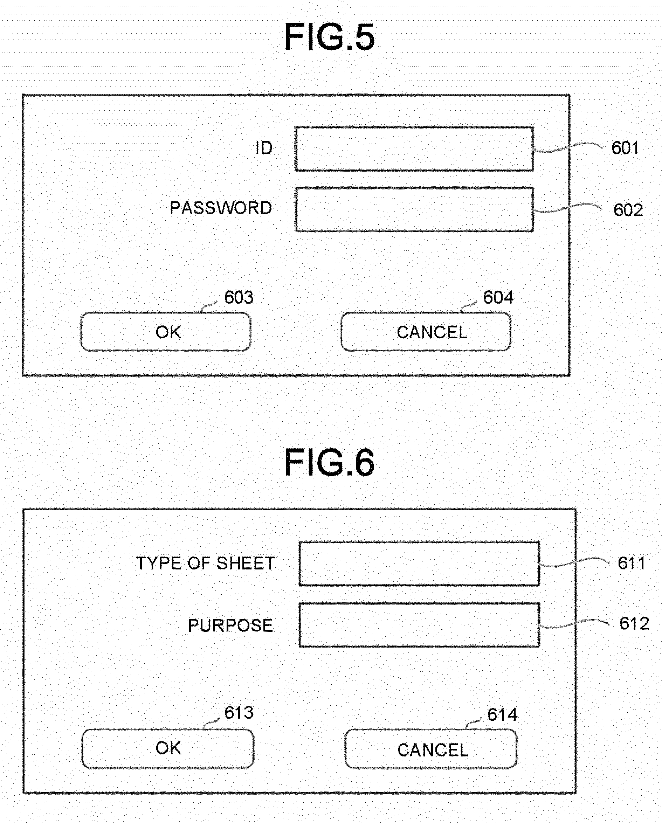

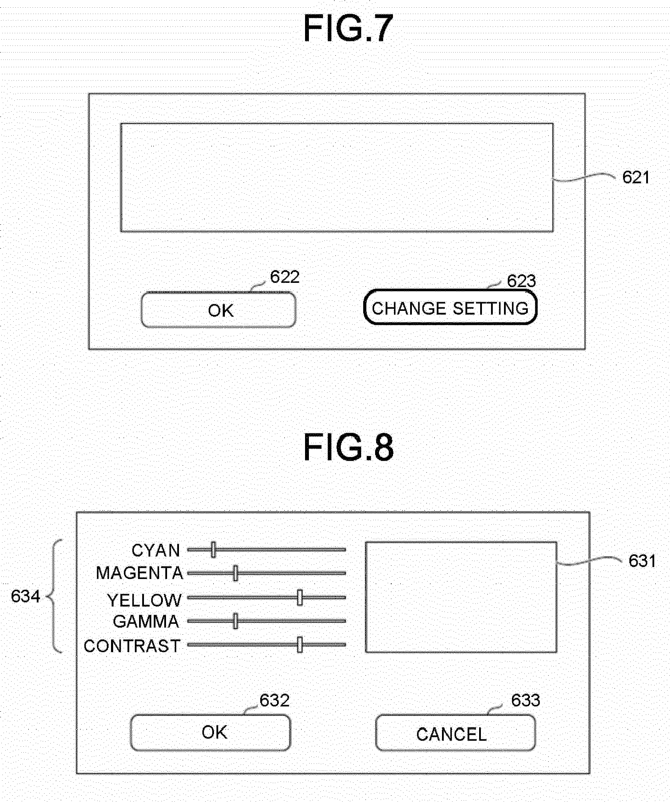

FIG. 5∼FIG. 8 are diagrams illustrating concrete examples of screens displayed on the display section 303 of the terminal device 300. FIG. 5 illustrates a concrete example of a screen displayed prior to the processing in ACT 104. That is, FIG. 5 illustrates a concrete example of a screen for requesting the user to input the authentication information. On the screen, a user ID inputting frame 601, a password inputting frame 602, an OK button 603 and a cancel button 604 are displayed. If the OK button 603 is pressed, at the point in time, information input in the user ID inputting frame 601 and the password inputting frame 602 is sent as the authentication information.

FIG. 6 illustrates a concrete example of a screen displayed prior to the processing in ACT 108. That is, FIG. 6 illustrates a concrete example of a screen for requesting the user to input the condition information. On the screen, a type inputting frame 611, a purpose inputting frame 612, an OK button 613 and a cancel button 614 are displayed. If the OK button 613 is pressed, at the point in time, information input in the type inputting frame 611 and the purpose inputting frame 612 is sent as the condition information.

FIG. 7 illustrates a concrete example of a screen displayed prior to the processing in ACT 113. That is, FIG. 7 illustrates a concrete example of a screen for requesting the user to input the determination instruction. On the screen, a confirmation information display frame 621, an OK button 622 and a setting change button 623 are displayed. If the OK button 622 is pressed, the image forming instruction is sent.

FIG. 8 illustrates a concrete example of a screen displayed in a case in which the setting change button 623 on the screen shown in FIG. 7 is pressed. FIG. 8 illustrates a concrete example of a screen for requesting the user to input the instruction of the image quality setting information. On the screen, a confirmation information display frame 631, an OK button 632, a cancel button 633 and a setting change input section 634 are displayed. In the confirmation information display frame 631, at the point in time, an example of an image in case of the image is formed according to the image quality setting information set through the setting change input section 634 is displayed. The image may be generated by the control section 304 of the terminal device 300 or the setting control section 205 of the server 200. In the setting change input section 634, screen for instructing the change of values relating to image quality setting information is displayed. In the example of FIG. 8, the screen for instructing each value of strength of each color of cyan, magenta and yellow, a gamma value, and strength of contrast is displayed. If the OK button 632 is pressed, at the point in time, image forming instruction based on the image quality setting information set by the setting change input section 634 is sent. In this case, the image forming instruction contains the image quality setting information changed by the setting change input section 634.

In the image forming system with such a structure, proper setting information is selected by the server 200 in response to the condition information. Then, the image formation based on the setting information selected by the server 200 is carried out by the image forming apparatus 100. Thus, even if the setting operation relating to the image formation is complicated, it is possible to reduce time and labor needed for the setting.

### [Modification]

It is appropriate in the structure for the setting information to contain neither the device setting information nor the image quality setting information.

It is appropriate in the structure for the setting information storage section 204 to store a setting information table suitable to each models of image forming apparatuses 100. In this case, the setting control section 205 acquires setting information from a setting information table suitable to an image forming apparatus used by the user. Identification information indicating the image forming apparatus used by the user may be contained in the setting start request or the condition information. It is appropriate in the structure for the setting information storage section 204 to store an individual setting information table for each valid user. In this case, the setting control section 205 may change the content of a setting information table according to the request sent from the terminal device 300 operated by a valid user. For example, the setting control section 205 may change part or whole of the device setting information or the image quality setting information according to the request of the valid user.

The setting information storage section 204 may separately store the device setting information and the image quality setting information as different tables. Hereinafter, the structure and operations are described in detail. The setting information storage section 204 stores the device setting information of the setting information as a setting information table suitable to each model of image forming apparatuses 100. The setting information storage section 204 stores the image quality setting information of the setting information as an individual setting information table for each valid user. In a case in which the authentication section 203 determines that the user is the valid one, the setting control section 205 reads out information corresponding to both the device setting information and the image quality setting information. Then, the setting control section 205 sends the read setting information to the image forming apparatus 100. On the other hand, in a case in which the authentication section 203 determines that the user is not the valid one, the setting control section 205 reads out the device setting information. In this case, the setting control section 205, for the image quality setting information, reads out image quality setting information for a general user. Then, the setting control section 205 sends the read setting information to the image forming apparatus 100. Further, in a case in which it is determined that the user is not the valid one, it is appropriate that image setting information is not read out and not sent to the image forming apparatus 100.

It is unnecessary to limit the valid user to a user who has valid authority to use the image forming apparatus 100. For example, the user who has valid authority to use the setting information provided by the server 200 may be the valid one.

The setting information table may include device setting information in association with the type of sheets regardless of the purposes. The setting information table may include image quality setting information in association with the purposes regardless of the type of sheets.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. A server apparatus, comprising:
an authentication section configured to execute an authentication processing for determining whether or not a user is the valid one; and
a setting control section configured to select setting information which is information relating to operations of an image forming apparatus used by the user according to an authentication result and condition information designated by the user and transmit the setting information to the image forming apparatus.

2. The server apparatus according to claim 1, wherein
the setting information contains either or both of device setting information relating to an operation of a print section of the image forming apparatus and image quality setting information relating to an operation of an image processing section of the image forming apparatus.

3. The server apparatus according to claim 1 or 2, wherein
the setting control section only transmits the setting information set by a user who is authenticated as the valid user through the authentication section to the image forming apparatus.

4. The server apparatus according to any one of claims 1 to 3, wherein
the condition information indicates conditions relating to image formation.

5. The server apparatus according to any one of claims 1 to 4, wherein
the setting information is defined for each type of the image forming apparatus; and
the setting control section selects the setting information corresponding to the type of an image forming apparatus used by the user.

6. The server apparatus according to any one of claims 1 to 5, wherein
the setting control section sends confirmation information which is information represents how to form an image in a case in which image formation is carried out according to the selected setting information.

7. The server apparatus according to any one of claims 1 to 6, wherein
the setting information is defined for each user; and
the setting control section selects the setting information corresponding to the user.

8. The server apparatus according to any one of claims 1 to 7, wherein
the setting information contains device setting information relating to an operation of a print section of the image forming apparatus and image quality setting information relating to an operation of an image processing section of the image forming apparatus;
the device setting information is defined for each type of the image forming apparatus;
the image quality setting information is defined for each user; and
the setting control section, for the device setting information, selects the device setting information corresponding to the type of the image forming apparatus used by the user, and for the image quality setting information, selects the image quality setting information corresponding to the user.

9. A control method, including:
executing an authentication processing for determining whether or not a user is the valid one; and
selecting setting information which is information relating to operations of an image forming apparatus used by the user according to an authentication result and condition information designated by the user, and transmitting the setting information to the image forming apparatus.

10. The control method according to claim 9, wherein
the setting information contains either or both of device setting information relating to an operation of a print section of the image forming apparatus and image quality setting information relating to an operation of an image processing section of the image forming apparatus.

11. The control method according to claim 9 or 10, further comprising the step of:
only transmitting the setting information set by a user who is authenticated as the valid user through the authentication section to the image forming apparatus.

12. The control method according to any one of claims 9 to 11, wherein
the condition information indicates conditions relating to image formation.

13. The control method according to any one of claims 9 to 12, wherein
the setting information is defined for each type of the image forming apparatus; and the method further comprises the step of:
selecting the setting information corresponding to the type of an image forming apparatus used by the user.

14. The control method according to any one of claims 9 to 13 further comprising the step of:
sending confirmation information which is information represents how to form an image in a case in which image formation is carried out according to the selected setting information.

15. An image forming system, comprising:
a print section configured to form an image on a sheet according to image data serving as an object of image formation;
a control section configured to carry out the image formation by controlling the print section according to setting information transmitted from the server apparatus according to any one of claims 1 to 8.
